# EUROPÄISCHE PATENTANMELDUNG

(11) **EP 2 863 538 A1**
(43) Veröffentlichungstag der Anmeldung: **22.04.2015**
(21) Anmeldenummer: 13188703.6
(22) Anmeldetag: 15.10.2013
(51) Int. Cl.: H02P 31/00

(54) **Informationsinterface und Antriebssystem mit demselben**

(71) Anmelder: SICK STEGMANN GmbH, 78166 Donaueschingen (DE)
(72) Erfinder: Appel, Bernd, 78050 Villingen-Schwenningen (DE)
(74) Vertreter: Ludewigt, Christoph

(57) **Zusammenfassung**

Um eine einheitliche Kommunikation zwischen einer Antrieb-Sensor-Anordnung und einer Steuerung zu ermöglichen, ist erfindungsgemäß ein Informationsinterface zum Bereitstellen einer Kommunikation zwischen einer Antrieb-Sensor-Anordnung, die eine Maschine antreibt, und einer Steuerung, die die Antrieb-Sensor-Anordnung steuert oder regelt, vorgesehen, mit einer Ein-/Ausgangseinheit zum Empfangen von verschiedenartigen, insbesondere aus verschiedensten Datenformaten bestehenden, ersten Informationssignalen mindestens einer Datenerfassungseinheit der Antrieb-Sensor-Anordnung und zum Ausgeben eines zweiten Informationssignals mittels eines Datenübertragungstelegramms an die Steuerung; und einer Informations-bearbeitungseinheit zum Bearbeiten der ersten Informationssignale zu dem zweiten Informationssignal, wobei die Informationsbearbeitungseinheit derart vorgesehen ist, zum Umwandeln der verschiedenartigen ersten Informationssignale in ein vorgegebenes vereinheitlichtes Datenformat und zum Erstellen des zweiten Informationssignals, und wobei das zweite Informationssignal nur aus dem vorgegebenen vereinheitlichten Datenformat besteht.

## Beschreibung

Die vorliegende Erfindung betrifft ein Informationsinterface zum Bereitstellen einer Kommunikation zwischen einer Antrieb-Sensor-Anordnung, die eine Maschine, wie z.B. eine Stanze, einen Bandförderer, oder dergleichen, antreibt, und einer Steuerung, die die Antrieb-Sensor-Anordnung steuert bzw. regelt.

Eine herkömmliche Antrieb-Sensor-Anordnung besteht üblicherweise aus einem Antrieb, der aus einem Motor und eventuell einem Getriebe besteht, einem Sensor, der insbesondere ein Positionsgeber ist, und einer Steuerung. Der Antrieb ist in einer automatisierten Anlage eingebaut und bewegt rotatorisch oder linear eine Achse der Anlage. Der Sensor ist mechanisch direkt mit dem Antrieb verbunden, so dass er Informationen bzgl. der bewegten Achse, wie z.B. Position, Geschwindigkeit, Beschleunigung oder dergleichen, erfasst und an die Steuerung kommuniziert. Die Steuerung berechnet aus den Informationen Stell- bzw. Regelgrößen, die zum Steuern bzw. Regeln des Antriebes dienen.

Der Austausch der Daten zwischen den Komponenten wird über Datenleitungen, auch sogenannte Bussysteme, abgewickelt.

Moderne Antrieb-Sensor-Anordnungen, im Folgenden auch als Systeme bezeichnet, erfordern eine Erhöhung an Informationserfassungen und -austausch, um die Performanz und die Verfügbarkeit der gesamten Anordnung bzw. des gesamten Systems zu verbessern.

Dies führt dazu, dass bestehende Systeme zum Teil sehr heterogen und komplex aufgebaut sind. D.h. die Systeme weisen einen großen Aufwand an Verkabelung und eine schwierige Konfiguration auf.

Aus der DE 10 2005 016 855 A1 ist ein System bekannt, das aus einem Motor, Sensoren, einer Steuerung und einem Schnittstellenmodul besteht. Hierbei erfassen die Sensoren unterschiedliche physikalische Größen des Systems und leiten diese an das Schnittstellenmodul. Das Schnittstellenmodul bearbeitet die Sensorsignale zu Auswertesignale und übermittelt die Auswertesignale über eine Busleitung an die Steuerung.

Es ist eine Aufgabe der vorliegenden Erfindung, ein Informationsinterface zum Bereitstellen einer Kommunikation zwischen einer Antrieb-Sensor-Anordnung und einer Steuerung derart zu verbessern, dass eine zentrale und einfache Kommunikation ermöglicht ist.

Die Aufgabe wird erfindungsgemäß gelöst, durch ein Informationsinterface zum Bereitstellen einer Kommunikation zwischen einer Antrieb-Sensor-Anordnung, die eine Maschine antreibt, und einer Steuerung, die die Antrieb-Sensor-Anordnung steuert oder regelt, mit einer Ein-/Ausgangseinheit zum Empfangen von verschiedenartigen, insbesondere aus verschiedensten Datenformaten bestehenden, ersten Informationssignalen mindestens einer Datenerfassungseinheit der Antrieb-Sensor-Anordnung und zum Ausgeben eines zweiten Informationssignals mittels eines Datenübertragungstelegramms an die Steuerung; und einer Informationsbearbeitungseinheit zum Bearbeiten der ersten Informationssignale zu dem zweiten Informationssignal, wobei die Informationsbearbeitungseinheit derart vorgesehen ist, zum Umwandeln der verschiedenartigen ersten Informationssignale in ein vorgegebenes vereinheitlichtes Datenformat und zum Erstellen des zweiten Informationssignals, und wobei das zweite Informationssignal nur aus dem vorgegebenen vereinheitlichten Datenformat besteht.

Gemäß einem bevorzugten Ausführungsbeispiel sind die verschiedenartigen ersten Informationssignale Signale von externen Sensoren, Encodern, und/oder Resolvern.

Dadurch ergibt sich der Vorteil, dass das erfindungsgemäße Informationsinterface flexibel erweiterbar bzw. konfigurierbar ist, so dass verschiedenste Sensoren und deren spezifische Datenformate auf einfachste Weise an die Steuerung kommuniziert werden kann. Hierzu stellt das Informationsinterface verschiedenste Anschlussmöglichkeiten, Signalerkennung, Signalverarbeitung, Signalumwandlung und Signalweiterleitung zur Verfügung.

Vorteilhafterweise ist die Ein-/Ausgangseinheit vorgesehen, zum Empfangen eines Steuersignals von der Steuerung mittels des Datenübertragungstelegramms und zum Ausgeben zumindest eines Stellsignals an zumindest einem Aktor, insbesondere einer Bremse, einer Kühlung, eines Vibrationskompensators und/oder dergleichen, der Antrieb-Sensor-Anordnung.

Gemäß einem weiteren bevorzugten Ausführungsbeispiel wandelt die Informationsbearbeitungseinheit die ersten Informationssignale in Echtzeit um und das zweite Informationssignal ist in Echtzeit versendbar.

Gemäß einem weiteren bevorzugten Ausführungsbeispiel ist die Informationsbearbeitungseinheit zum Zwischenspeichern der ersten Informationssignale und des zweiten Informationssignals vorgesehen. Dadurch ist eine Überwachung und Analyse des Systems ermöglicht, wobei eine Diagnose und damit verbundene mögliche Fehlerbehebung des Systems stark vereinfacht sind.

Gemäß einem weiteren bevorzugten Ausführungsbeispiel unterscheiden die verschiedenartigen ersten Informationssignale sich in ihren Datenformaten mittels unterschiedlicher Datenarten, Datentypen und/oder Datenprotokolle. Hierbei beinhaltet vorteilhafterweise die Datenart analoge oder digitale Informationen, gibt der Datentyp eine bei der Datenerfassungseinheit verwendete Typisierung wieder, wie z.B. ordinale, elementare, universelle, abstrakte und/oder proprietäre Syntax, und stellt das Datenprotokoll vorgegebene Datenaustauschregeln dar.

Gemäß einem weiteren bevorzugten Ausführungsbeispiel geben die ersten Informationssignale eine Position, eine Geschwindigkeit, eine Beschleunigung, eine Temperatur, eine Vibration, einen mechanischen Zustand und/oder dergleichen der Antrieb-Sensor-Anordnung und/oder deren Aktoren wieder.

Gemäß einem weiteren bevorzugten Ausführungsbeispiel ist eine drahtlose Datenübertragung vorgesehen.

Ferner ist ein Antriebssystem vorgesehen, das eine Antrieb-Sensor-Anordnung, die eine Maschine antreibt, eine Steuerung, die die Antrieb-Sensor-Anordnung steuert oder regelt, und ein erfindungsgemäßes Informationsinterface aufweist.

Im Folgenden wird die Erfindung anhand von Ausführungsbeispielen unter Bezugnahme auf die Zeichnungen im Einzelnen erläutert. In den Zeichnungen zeigen:
- Fig. 1: eine schematische Darstellung einer automatisierten Anlage mit einem erfindungsgemäßen Informationsinterface;
- Fig. 2: eine schematische Darstellung einer erfindungsgemäßen Antrieb-Sensor-Anordnung mit zusätzlicher Aktorik.

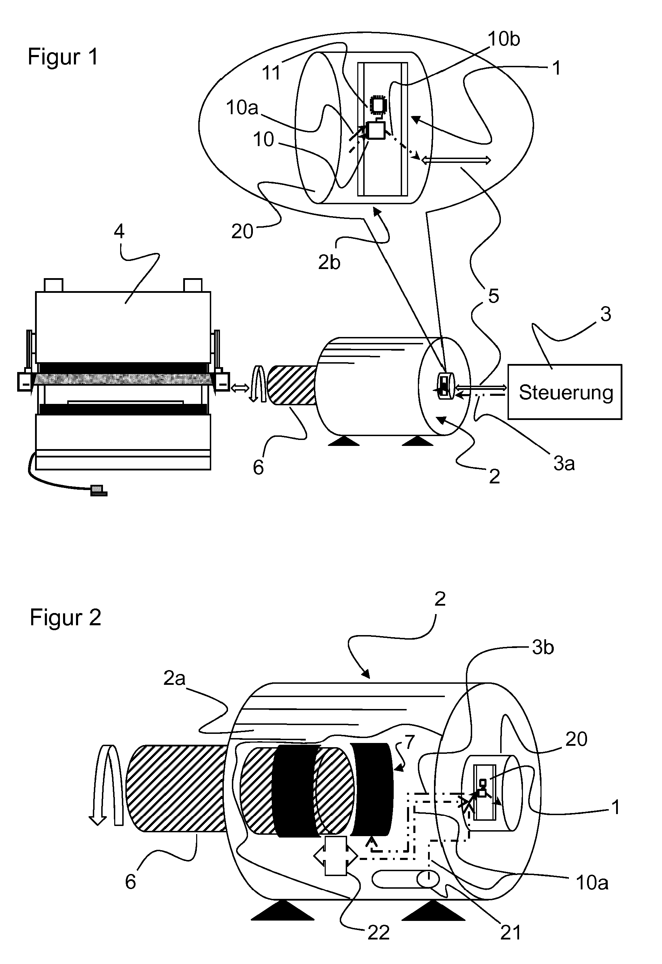

In der Figur 1 ist schematisch eine automatisierte Anlage dargestellt, in der eine Maschine 4, z.B. eine Stanze, mittels einer Antrieb-Sensor-Anordnung 2 angetrieben ist. Die Antrieb-Sensor-Anordnung 2 besteht aus einem Antrieb 2a mit einer Welle 6, die mit der Maschine 4 verbunden ist und diese antreibt, einer Datenerfassungseinheit 2b, die Informationen betreffend des Antriebes 2a erfasst und mechanisch mit der Welle 6 verbunden ist, und einer Steuerung 3, die den Antrieb 2a steuert bzw. regelt.

Gemäß dem Ausführungsbeispiel besteht die Datenerfassungseinheit 2b aus einem Positionsgeber 20, der die Information bzgl. der Position, der Geschwindigkeit, der Beschleunigung oder dergleichen der Welle 6 erfasst und an die Steuerung 3 übermittelt. Die Datenübermittlung erfolgt über ein Datenübertragungstelegramm 5, so dass Steuersignale 3a von der Steuerung 3 an den Antrieb 2a übertragen werden können, um den Antrieb 2a im Betrieb zu steuern bzw. zu regeln.

Ein erfindungsgemäßes Informationsinterface 1 ist vorgesehen, um eine Kommunikation zwischen der Antrieb-Sensor-Anordnung 2 und der Steuerung 3 bereitzustellen. Hierbei kann das Informationsinterface 1 im oder am Antrieb 2a, insbesondere an dessen Welle 6, oder integriert in die Datenerfassungseinheit 2b oder an derselben vorgesehen sein.

Das Informationsinterface 1 weist eine Ein-/Ausgangseinheit 10 auf, die ausgelegt ist zum Empfangen von verschiedenartigen, insbesondere aus verschiedensten Datenformaten bestehenden, ersten Informationssignalen 10a der Datenerfassungseinheit 2b und zum Ausgeben eines zweiten Informationssignals 10b mittels des Datenübertragungstelegramms 5 an die Steuerung 3. Hierbei wird unter Datenübertragungstelegramm im Sinne der Erfindung eine übertragende Datennachricht zwischen der Datenerfassungseinheit 2b und der Steuerung 3 verstanden, wobei die Datennachricht bestimmte Informationen bzgl. des Antriebes 2a, einen vorgegebenen Aufbau der Informationen, eine vorgegebene Nachrichtstruktur und vorteilhafterweise eine Anweisung betreffend einer Abarbeitung des Telegramms beinhaltet.

Ferner weist das Informationsinterface 1 eine Informationsbearbeitungseinheit 11 auf, die zum Bearbeiten der ersten Informationssignale 10a zu dem zweiten Informationssignal 10b ausgebildet ist. Die Informationsbearbeitungseinheit 11 wandelt die verschiedenartigen ersten Informationssignale 10a in ein vorgegebenes vereinheitlichtes Datenformat um und erstellt das zweite Informationssignal 10b, das nur aus dem vorgegebenen vereinheitlichten Datenformat besteht. Das zweite Informationssignal 10b mit dem vorgegebenen vereinheitlichten Datenformat wird in das Datenübertragungstelegramm 5 integriert und durch die Ein-/Ausgangseinheit 10 an die Steuerung 3 übermittelt.

Da die Datenerfassungseinheit 2b aus, im beschriebenen Ausführungsbeispiel, einem Positionsgeber 20 oder auch aus anderen externen Sensoren, Encodern und/oder Resolvern bestehen kann, ermöglicht das erfindungsgemäße Informationsinterface 1 auf einfachste Art und Weise eine Erfassung der verschiedenartigen Informationssignale und eine Übermittlung eines Informationssignals mit vereinheitlichtem Datenformat, so dass eine Weiterbearbeitung in der Steuerung 3 entsprechend vereinfacht ist. D.h. die erfassten ersten Informationssignale 10a sind Signale der externen Sensoren, Encoder und/oder Resolver, die insbesondere aus völlig verschiedensten Datenformaten bestehen, und werden in dem zweiten Informationssignal 10b aus dem vorgegebenen vereinheitlichten Datenformat umgewandelt.

Hierbei unterscheiden sich die verschiedenartigen ersten Informationssignale 10a in ihren Datenformaten mittels unterschiedlicher Datenarten, Datentypen und/oder Datenprotokolle. Im Sinne der Erfindung beinhaltet die Datenart z.B. analoge oder digitale Informationen. Der Datentyp gibt eine bei der Datenerfassungseinheit 2b verwendete Typisierung wieder, und das Datenprotokoll stellt vorgegebene Datenaustauschregeln dar. Die Typisierung ist vorteilhafterweise in ordinaler, elementarer, universeller, abstrakter und/oder proprietärer Syntax klassifiziert.

Somit können mittels des erfindungsgemäßen Informationsinterfaces 1 völlig unabhängig von der Hardware bzw. Firmware der verwendeten Datenerfassungseinheit 2b, insbesondere der Sensorik, die Informationssignale 10a erfasst, verarbeitet und als aus dem vorgegebenen vereinheitlichten Datenformat bestehenden Informationssignal 10b übermittelt werden.

Die Steuerung 3 verarbeitet hierbei das zweite Informationssignal 10b entsprechend dem erhaltenen Datenübertragungstelegramm und sendet mittels des Datenübertragungstelegramms ein Steuersignal 3a an die Ein-/Ausgangseinheit 10 des Informationsinterface 1, das wiederum ausgelegt ist zum Ausgeben zumindest eines Stellsignals 3b an zumindest einem angeschlossenen Aktor, insbesondere einer Bremse 7, einer Kühlung, eines Vibrationskompensators und/oder dergleichen, der Antrieb-Sensor-Anordnung 2. Bevorzugterweise wandelt die Informationsbearbeitungseinheit 11 die ersten Informationssignale 10a in Echtzeit um und das zweite Informationssignal 10b wird in Echtzeit versendet.

Vorteilhafterweise ist die Informationsbearbeitungseinheit 11 zum Zwischenspeichern der ersten Informationssignale 10a und des zweiten Informationssignals 10b ausgebildet. Dadurch kann die Steuerung 3 bei einer Diagnose der Antrieb-Sensor-Anordnung 2 auf die Daten zugreifen.

Gemäß einem bevorzugten Ausführungsbeispiel weist der Antrieb 2a, wie in der Figur 2 gezeigt, neben dem Positionsgeber 20 weitere Sensorik und Aktorik auf. Ein Temperatursensor 21 ist vorgesehen, um die Temperatur der Antrieb-Sensor-Anordnung 2 zu bestimmen. Ferner ist ein Bremsensensor 22 vorgesehen, der einen Zustand einer Bremse 7 des Antriebes 2a erfasst.

Die aufgrund der unterschiedlichen Hardware und Firmware der verwendeten Sensoren verschiedenartigen Informationssignale 10a werden an das erfindungsgemäße Informationsinterface 1 gesendet, wobei das Informationsinterface 1 die Informationssignale 10a mit ihren unterschiedlichen Datenformaten empfängt und in dem zweiten Informationssignal 10b mit dem vereinheitlichten Datenformat umwandelt.

Hierbei sind die Datenformate durch unterschiedliche Datenarten, Datentypen und/oder Datenprotokolle voneinander verschieden. Bei der Datenart werden analoge oder digitale Informationen verstanden. Der Datentyp gibt eine bei den Sensoren verwendete Typisierung wieder. Das Datenprotokoll stellt vorgegebene Datenaustauschregeln dar, die gewissermaßen dem Datenaustauschtelegramm 5 ähnelt.

Das Informationsinterface 1 vereinheitlicht somit die Informationssignale 10a und arbeitet das vereinheitlichte Informationssignal 10b in das Datenaustauschtelegramm 5 an die Steuerung 3 ein.

Mit dem Steuersignal 3a kann die Steuerung 3 den Antrieb 2a steuern bzw. regeln.

Hierbei kann gemäß dem bevorzugten Ausführungsbeispiel ein Zustand der Bremsen 7 des Antriebes 2a überwacht werden, so dass bei einer gegebenen Abnutzungsgrenze eine Warnung durch das Informationsinterface 1 erfolgen kann.

Ferner kann das Informationsinterface 1 ein Stellsignal 3b generieren und mittels des Stellsignals 3b die Bremse 7 aktivieren bzw. deaktivieren, so dass die Steuerung der Bremse 7 teilweise von der Steuerung 3 in das Informationsinterface 1 verlagert werden kann.

Die gesamte Datenkommunikation kann auch drahtlos an das bzw. vom Informationsinterface 1 durchgeführt werden. Hierbei ist die Kommunikation bidirektional ausgelegt, unabhängig davon, ob es sich um eine drahtgebundene oder drahtlose Verbindung handelt.

### Bezuaszeichenliste

- 1: Informationsinterface
- 2: Antrieb-Sensor-Anordnung
- 2a: Antrieb
- 2b: Datenerfassungseinheit
- 3: Steuerung
- 3a: Steuersignal
- 3b: Stellsignal
- 4: Maschine
- 5: Datenübertragungstelegramm
- 6: Welle
- 7: Bremsen

- 10: Ein-/Ausgangseinheit
- 10a: erste Informationssignale
- 10b: zweites Informationssignal
- 11: Informationsbearbeitungseinheit

- 20: Positionssensor
- 21: Temperatursensor
- 22: Bremsensensor

## Patentansprüche

1. Informationsinterface (1) zum Bereitstellen einer Kommunikation zwischen einer Antrieb-Sensor-Anordnung (2), die eine Maschine (4) antreibt, und einer Steuerung (3), die die Antrieb-Sensor-Anordnung (2) steuert oder regelt, mit einer Ein-/Ausgangseinheit (10) zum Empfangen von verschiedenartigen, insbesondere aus verschiedensten Datenformaten bestehenden, ersten Informationssignalen (10a) mindestens einer Datenerfassungseinheit (2b) der Antrieb-Sensor-Anordnung (2) und zum Ausgeben eines zweiten Informationssignals (10b) mittels eines Datenübertragungstelegramms (5) an die Steuerung (3); und
einer Informationsbearbeitungseinheit (11) zum Bearbeiten der ersten Informationssignale (10a) zu dem zweiten Informationssignal (10b),
wobei die Informationsbearbeitungseinheit (11) derart vorgesehen ist, zum Umwandeln der verschiedenartigen ersten Informationssignale (10a) in ein vorgegebenes vereinheitlichtes Datenformat und zum Erstellen des zweiten Informationssignals (10b), und wobei das zweite Informationssignal (10b) nur aus dem vorgegebenen vereinheitlichten Datenformat besteht.

2. Informationsinterface nach Anspruch 1, wobei die verschiedenartigen ersten Informationssignale (10a) Signale von externen Sensoren, Encodern, und/oder Resolvern sind.

3. Informationsinterface nach Anspruch 1 oder 2, wobei die Ein-/Ausgangseinheit (10) vorgesehen ist, zum Empfangen eines Steuersignals (3a) von der Steuerung (3) mittels des Datenübertragungstelegramms (5) und zum Ausgeben zumindest eines Stellsignals (3b) an zumindest einen Aktor, insbesondere einer Bremse (7), einer Kühlung, eines Vibrationskompensators und/oder dergleichen, der Antrieb-Sensor-Anordnung (2).

4. Informationsinterface nach einem der Ansprüche 1 bis 3, wobei die Informationsbearbeitungseinheit (11) die ersten Informationssignale (10a) in Echtzeit umwandelt und das zweite Informationssignal (10b) in Echtzeit versendbar ist.

5. Informationsinterface nach einem der Ansprüche 1 bis 4, wobei die Informationsbearbeitungseinheit (11) zum Zwischenspeichern der ersten Informationssignale (10a) und des zweiten Informationssignals (10b) vorgesehen ist.

6. Informationsinterface nach einem der Ansprüche 1 bis 5, wobei die verschiedenartigen ersten Informationssignale (10a) sich in ihren Datenformaten mittels unterschiedlicher Datenarten, Datentypen und/oder Datenprotokolle unterscheiden.

7. Informationsinterface nach Anspruch 6, wobei die Datenart analoge oder digitale Informationen beinhaltet, der Datentyp eine bei der Datenerfassungseinheit (2b) verwendete Typisierung wiedergibt und das Datenprotokoll vorgegebene Datenaustauschregeln darstellt, wobei die Typisierung in ordinaler, elementarer, universeller, abstrakter und/oder proprietärer Syntax klassifiziert ist.

8. Informationsinterface nach einem der vorhergehenden Ansprüche, wobei die ersten Informationssignale (10a) eine Position, eine Geschwindigkeit, eine Beschleunigung, eine Temperatur, eine Vibration, einen mechanischen Zustand und/oder dergleichen der Antrieb-Sensor-Anordnung (2) und/oder deren Aktoren wiedergeben.

9. Informationsinterface nach einem der vorhergehenden Ansprüche, wobei eine drahtlose Datenübertragung vorgesehen ist.

10. Antriebssystem mit einer Antrieb-Sensor-Anordnung (2), die eine Maschine (4) antreibt, einer Steuerung (3), die die Antrieb-Sensor-Anordnung (2) steuert oder regelt, und einem Informationsinterface (1) nach einem der Ansprüche 1 bis 9.
